# EUROPEAN PATENT SPECIFICATION

(11) **EP 1 824 334 B1**
(45) Date of publication and mention of the grant of the patent: **14.01.2009**
(21) Application number: 05821002.2
(22) Date of filing: 13.12.2005
(51) Int. Cl.: A01G 9/10, A01G 9/02

(54) **CONTAINER**
BEHÄLTER
RECIPIENT

(30) Priority: 13.12.2004 GB 0427260
(43) Date of publication of application: 29.08.2007
(73) Proprietor: Willerby Landscapes Limited, Edenbridge, Kent TN8 6RN (GB)
(72) Inventor: CARLEY, Stephen James, c/o Willerby Landscapes Ltd, Edenbridge, Kent TN8 6RN (GB)
(74) Representative: Anderson, James Edward George
(86) International application number: PCT/GB2005/004769
(87) International publication number: WO 2006/064195

(56) References cited:
- EP-A- 0 244 935
- DE-A1- 4 335 904
- DE-U1- 7 814 601
- DE-U1- 8 910 273

## Description

This invention relates to a container. In particular, this invention relates to a container of the type used to accommodate trees and other large plants in public places. Such containers are commonly known as planters. Such a container is known, for example, from DE 78 14601 U1.

Trees and other large plants can provide an attractive background to a landscape. This is particularly the case in urban environments where the landscape can otherwise appear rather monotonous and dull. In such environments, trees are commonly accommodated in containers. Containers allow for the trees to be conveniently sited close to buildings without any major preparation work being required. Containers also allow for trees to be grown to off-site, for example at a tree nursery, and only positioned in the intended environment, for example at the entrance to an office building, once semi-mature.

According to the invention, there is provided an impact resistant container for trees or other large plants, the container comprising: side walls fabricated from a plurality of layers of steel beams, the beams having a rectangular open cross-section; and a rigid base member arranged within the side walls, wherein at least one of the side walls comprises a deformation initiating means for initiating deformation of the steel beams in an impact.

The invention recognises that containers of the type used for accommodating trees can be adapted to form effective barriers to protect against attacks on buildings from motorised vehicles, for example by terrorists. With such containers strategically placed outside a building, the building can be protected by ensuring that any impact from a motorised vehicle is absorbed by the containers.

The invention provides a container having a side walls and a base member arranged within the side walls. At least one of the side walls is provided with a deformation initiating means, for example, the side wall facing away from a building. When a vehicle is driven at speed at the container positioned in front of the building, the side wall is intended to collapse, and thereby absorb a substantial amount of the impact energy of the collision. In this way, the container and/or the vehicle are prevented from being projected into the building.

The container is also intended to immobilise the vehicle before it can reach the building. Specifically, the axles of the vehicle may be immobilised, for example by the rigid base member of the container.

In preferred embodiments, a side wall thickness provided by an upper layer of the beams is greater than a side wall thickness provided by lower layers of the beams. Such an arrangement provides a structure which may collapse in a controlled and predictable way.

If the beams have a non-square cross-section, then the lower layers of beams may be arranged with the side wall thickness being provided by the smaller dimension of the beam cross-section. The upper layer beams are then simply rotated by 90 degrees to provide a greater wall thickness.

The upper layer of the beams may be inwardly extending, so as to provide a flat outer surface to the side walls.

The deformation initiating means may comprise any combination of suitable features, such as cuts, serrations, holes, depressions and material weaknesses formed in the beams. The deformation initiating means is preferably provided in the upper layer of the beams, and is preferably formed in an inwardly facing portion.

In embodiments, the cross-section of the beams may have a length in the range 50mm to 150mm, more preferably 75mm to 125mm and most preferably 90mm to 110mm. The cross-section may have a width in the range 150mm to 300mm, more preferably 175mm to 250mm and most preferably 190mm to 220mm. The wall thickness of the beams may be in the range 3mm to 10mm, more preferably 3mm to 7mm and most preferably about 5mm.

The steel beams are preferably welded together at discrete locations, rather than along their entire lengths. For example, the beams may be "stitch welded".

The side walls may together define a rectangle in plan view, so as to provide a rectangular container. Ends of the beams of adjacent sidewalls may be overlapped. By overlapping the steel beams in this way, at least one beam in each side wall is supported from behind by the ends of beams in adjacent side walls.

The side walls may have a height in the range 600mm to 1200mm, and the base member may have a height in the range 300mm to 500mm.

The base member preferably comprises a block of concrete. The block of concrete provides a bottom for the container and adds mass to the container. The block of concrete may comprise concrete reinforced with steel mesh.

The base member may have a number of apertures through its fabric for anchoring the container to the ground. The apertures are for use in anchoring the container to the ground, thereby reducing its tendency to act as a projectile when impacted.

At least one of the apertures may be angled towards a side wall. In a preferred embodiment, apertures nearest a side wall facing a building to be protected are angled towards the building at their lower end, while apertures nearest a side wall facing away from the building will not be angled. Intermediate apertures may be provided at intermediate angles.

The base member may further comprise a number of brackets for attaching the base member to the side walls.

The container may be clad in a decorative sheet material, such as stainless steel. The container may contain a planting compost or the like, with trees or other large plants arranged therein.

The invention also provides an arrangement comprising the container described above, positioned on the ground. The arrangement further comprises a number of bars anchoring the container to the ground, the bars extending through respective ones of the apertures in the base member and received in corresponding holes in the ground. Threaded nuts may be used for urging the container against the ground.

The arrangement may comprise a cement, for example an epoxy resin, for bonding the bars into the apertures and holes through which they extend/are received.

The invention will now be described, purely by way of example, with reference to the accompanying drawings, in which:
Figure 1 is a plan view of a container according to the invention;
Figure 2 is a cross sectional view of the container shown in Figure 1; and
Figure 3 is a partially cut away front view of the container shown in Figure 1.

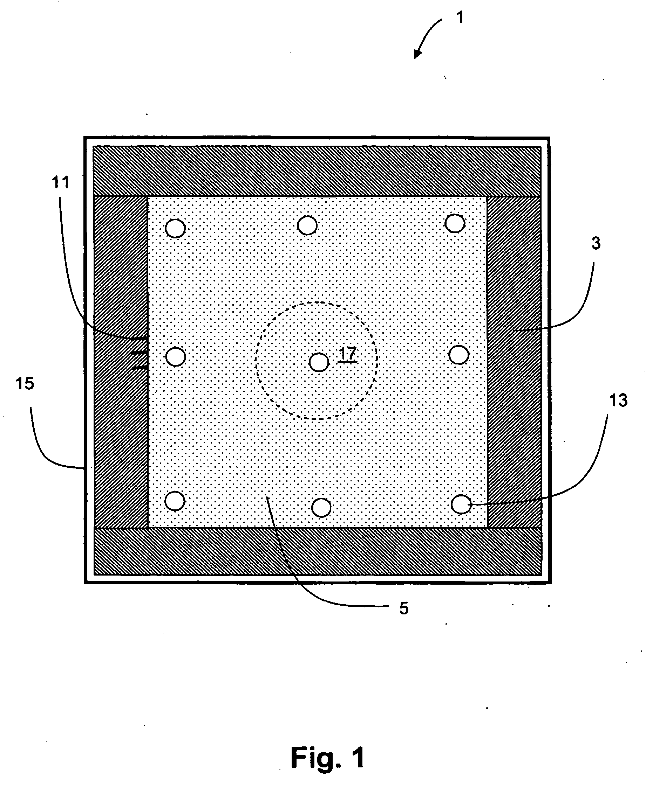

Figures 1 to 3 show a container according to the invention. The Figures are intended for the purpose of explaining the invention and are not drawn to scale. Moreover, the Figures omit some features for the sake of clarity, which features will be apparent to those skilled in the art.

Referring to Figures 1 to 3, the container 1 according to the invention comprises side walls 3 and a base member 5 arranged within the side walls 3. Four side walls 3 are provided, which together define a square shape for the container 1. The side walls are each 2200mm long (outside measurement) and 900mm high.

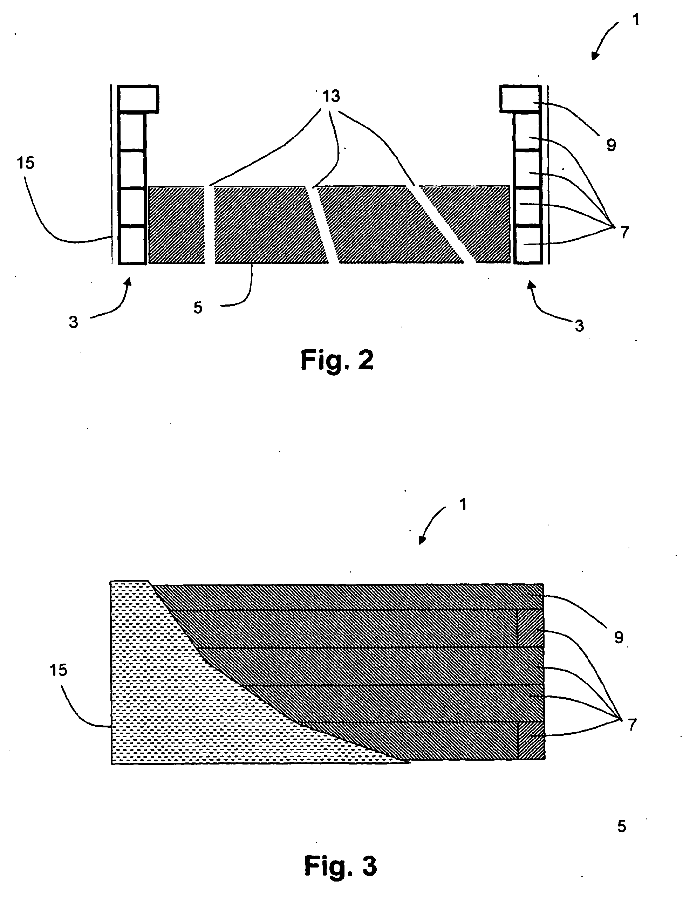

The side walls 3 are fabricated from galvanised steel beams having a rectangular open cross-section, as shown in Figure 2. The length of the beam cross-section is 200mm and the width of the beam cross section is 100mm. The wall thickness of the beams is 5mm.

As shown in Figure 2, the side walls 3 are fabricated with four lower layers 7 of the beams stacked on their minor surfaces. An upper layer 9 of the beams is stacked on top of the lower layers 7. The beams of the upper layer 9 are stacked on their major surfaces. The upper layer 9 of the beams is arranged to be inwardly extending, so that the outer surface of the side walls is substantially flat. The total height of the sidewalls is 900mm.

One of the beams forming the upper layer 9 has a number of serrations 11 formed on the inwardly extending portion thereof, as shown in Figure 1. The serrations are formed perpendicular to the beam axis. The serrations effectively weaken the beam and act as a deformation initiating means in the event of an impact.

As shown in Figure 3, beams of adjacent layers overlap each other at the ends of the side walls 3. The overlapping of the beams is alternated through the layers.

Adjacent beams of the side walls 3 are welded together at discrete locations. In particular, the beams are welded together at their ends and also intermittently along their entire length.

The base member 5 is in the form of a concrete insert that provides a bottom wall of the container 1. The base member 5 is 400 mm high and encapsulates brackets (not shown) that are welded to the interior of the side walls 3. The concrete of the base member 5 is reinforced with a steel reinforcement mesh.

The base member 5 has nine of apertures 13 formed therein for anchoring the container 1 to the ground. An aperture 13 closest to the side wall 3 having the serrations 11 is formed perpendicular to the plane of the base member 5. An aperture 13 furthest from the side wall 3 having the serrations 11 is formed with its lower end angled away from the side wall 3 having the serrations 11. Intermediately located apertures are formed at intermediate angles.

The outside surface of the side walls 3 is clad in stainless steel sheet material 15 having a thickness of 0.9mm. The sheet material 15 is intended to primarily serve an aesthetic purpose. At the top and bottom of the container 1, the sheet material 15 is folded back horizontally to mask the underlying structure of the container 1.

In use, the container 1 is permanently anchored to the ground by nine threaded steel bars of 25mm diameter. The threaded bars are set into the apertures 13 in the base member 5 and the ground using an epoxy resin. The bars penetrate the ground to a depth of 150mm. The concrete insert 9 is secured by tightening nuts onto the threaded bars.

The container 1 is arranged with the side wall 3 having the serrations 11 facing away from a building to be protected.

A semi-mature tree (approximate height 9m) is then lifted and inserted into the container 1. In Figure 1, the base of the tree is represented by circle 17.

The container 1 provides an attractive background for an environment, while at the same time serving as an impact resistant barrier adapted to immobilise motorised vehicles that are driven at the container 1.

Testing has shown that the above described container is particularly effective as an impact resistant barrier. In particular, the heavy base member 5 immobilises the front axle of a motorised vehicle, while the side walls, and in particular the upper layer 9 of the beams, deform to absorb the energy of the impact.

In an impact, the threaded bars in the apertures 13 that are perpendicular to a plane of the base member 5 prevent the container from lifting off the ground, while the threaded bars in the angled apertures 13 restrict movement of the container 1 towards a protected building.

A specific example of a container according to the invention has been described. Various modifications within the scope of the invention will be apparent the those skilled in the art.

For example, the tree may be inserted in the container before the sheet material is applied, so as to preserve the aesthetic finish of the sheet material.

Although a square container has been described, the container may be of any shape depending on practical requirements.

In the above described example, the container is anchored to the ground by nine threaded steel bars. However, any number of bars may be used to anchor the container, although there are preferably at least four such bars. Other methods of anchoring may also be appropriate.

In the above described example, a side wall has a deformation initiating means in the form of serrations cut into a beam. However, other forms of deformation initiating means are suitable, such as holes cut into the beam and depressions formed in a surface of the beam. The above described deformation initiating means is intended to initiate bending of the beam when loaded from the side. However, other deformation initiating means may, for example, initiate buckling of the beam when loaded at its ends.

## Claims

1. An impact resistant container (1) for trees or other large plants, the container (1) comprising,
side walls (3) fabricated from a plurality of layers of steel beams (7), the beams (7) having a rectangular open cross-section; and
a rigid base member (5) arranged within the side walls (3),
wherein at least one of the side walls (3) comprises a deformation initiating means (11) for initiating deformation of the steel beams (7) in an impact.

2. The container (1) of claim 1, wherein a side wall (3) thickness provided by an upper layer of the beams (9) is greater than a side wall thickness provided by lower layers of the beams (7).

3. The container (1) of claim 2, wherein the upper layer (9) of the beams is inwardly extending.

4. The container (1) of claim 2 or 3, wherein the deformation initiating means (11) as provided in the upper layer (9) of the beams.

5. The container (1) of any preceding claim, wherein the deformation initiating means (11) comprises cuts and/or depressions formed in the beams.

6. The container (1) of claim 5, wherein the cuts and/or depressions are formed in an inner portion of the beams.

7. The container (1) of any preceding claim, wherein the cross-section of the beams has a length in the range 150mm to 300mm and a width in the range 50mm to 150mm.

8. The container (1) of any preceding claim, wherein a wall thickness (3) of the beams is in the range 3mm to 10mm.

9. The container (1) of any preceding claim, wherein the beams (3) are welded together at discrete locations.

10. The container (1) of any preceding claim, wherein the side walls (3) together have a rectangular cross section in plan view.

11. The container (1) of any preceding claim, wherein ends of the beams (7) of adjacent sidewalls are overlapped.

12. The container (1) of any preceding claim, wherein the side walls (3) have a height in the range 600mm to 1200mm.

13. The container (1) of any preceding claim, wherein the base member (5) comprises a block of concrete.

14. The container (1) of claim 13, wherein the block of concrete comprises concrete reinforced with steel mesh (15).

15. The container (1) of any preceding claim, wherein the base member (5) has a height in the range 200mm to 400mm.

16. The container (1) of any preceding claim, wherein the base member (5) has a number of apertures (13) or anchoring the container to the ground.

17. The container of claim 13, wherein at least one of the apertures (13) is angled towards one of the side walls (3).

18. An arrangement comprising the container of claim 16 or 17 positioned on a ground surface, wherein the arrangement further comprises a number of threaded bars anchoring the container (1) to the ground, the bars extending through respective ones of the apertures (13) in the base member (5) and received in corresponding holes in the ground surface.

19. The arrangement of claim 18, further comprising a cement for bonding the bars in the apertures (13) and holes through which they extend/are received.

20. The arrangement of claim 19, wherein the cement is a resin cement.

21. The container (1) of any preceding claim, clad in a decorative sheet material.

## Patentansprüche

1. Schlagfester Behälter (1) für Bäume oder andere große Pflanzen, der Folgendes umfasst:
Seitenwände (3), die aus mehreren Schichten aus Stahlträgern (7) hergestellt werden, wobei die Träger (7) einen rechteckigen offenen Querschnitt aufweisen, und
ein steifes Bodenelement (5), das innerhalb der Seitenwände (3) angeordnet ist,
wobei mindestens eine der Seitenwände (3) ein verformungsauslösendes Mittel (11) zum Auslösen einer Verformung der Stahlträger (7) bei einem Schlag umfasst.

2. Behälter (1) nach Anspruch 1, bei dem die Dicke einer Seitenwand (3), die von einer oberen Schicht der Träger (9) bereitgestellt wird, größer ist als die Dicke der Seitenwand, die von unteren Schichten der Träger (7) bereitgestellt wird.

3. Behälter (1) nach Anspruch 2, bei dem die obere Schicht (9) der Träger nach innen hin verbreitert ist.

4. Behälter (1) nach Anspruch 2 oder 3, bei dem das verformungsauslösende Mittel (11) in der oberen Schicht (9) der Träger bereitgestellt wird.

5. Behälter (1) nach einem der vorhergehenden Ansprüche, bei dem das verformungsauslösende Mittel (11) in den Trägern ausgebildete Einschnitte und/ oder Vertiefungen umfasst.

6. Behälter (1) nach Anspruch 5, bei dem die Einschnitte und/ oder Vertiefungen in einem Innenabschnitt der Träger ausgebildet sind.

7. Behälter (1) nach einem der vorhergehenden Ansprüche, bei dem der Querschnitt der Träger eine Länge im Bereich von 150 mm bis 300 mm und eine Breite im Bereich von 50 mm bis 150 mm aufweist.

8. Behälter (1) nach einem der vorhergehenden Ansprüche, bei dem eine Wanddicke (3) der Träger im Bereich von 3 mm bis 10 mm liegt.

9. Behälter (1) nach einem der vorhergehenden Ansprüche, bei dem die Träger (7) an diskreten Stellen miteinander verschweißt sind.

10. Behälter (1) nach einem der vorhergehenden Ansprüche, bei dem die Seitenwände (3) in der Draufsicht insgesamt einen rechteckigen Querschnitt aufweisen.

11. Behälter (1) nach einem der vorhergehenden Ansprüche, bei dem sich die Enden der Träger (7) benachbarter Seitenwände überlappen.

12. Behälter (1) nach einem der vorhergehenden Ansprüche, bei dem die Seitenwände (3) eine Höhe im Bereich von 600 mm bis 1200 mm aufweisen.

13. Behälter (1) nach einem der vorhergehenden Ansprüche, bei dem das Bodenelement (5) einen Betonblock umfasst.

14. Behälter (1) nach Anspruch 13, bei dem der Betonblock mit Stahlgeflecht (15) verstärkten Beton umfasst.

15. Behälter (1) nach einem der vorhergehenden Ansprüche, bei dem das Bodenelement (5) eine Höhe im Bereich von 200 mm bis 400 mm aufweist.

16. Behälter (1) nach einem der vorhergehenden Ansprüche, bei dem das Bodenelement (5) mehrere Öffnungen (13) für das Verankern des Behälters am Boden aufweist.

17. Behälter nach Anspruch 13, bei dem mindestens eine der Öffnungen (13) zu einer der Seitenwände (3) hin abgewinkelt ist.

18. Anordnung, die den Behälter nach Anspruch 16 oder 17 umfasst, der auf einer Bodenfläche positioniert ist, wobei die Anordnung des Weiteren mehrere mit Gewinde versehene Stäbe umfasst, die den Behälter (1) am Boden verankern, wobei die Stäbe durch die entsprechenden Öffnungen (13) in dem Bodenelement (5) verlaufen und in entsprechenden Löchern in der Bodenfläche aufgenommen werden.

19. Anordnung nach Anspruch 18, die des Weiteren einen Kleber umfasst, mit dem die Stäbe in den Öffnungen (13) und Löchern, durch die sie verlaufen/ in denen sie aufgenommen werden, befestigt werden.

20. Anordnung nach Anspruch 19, bei der es sich bei dem Kleber um einen Harzkleber handelt.

21. Behälter (1) nach einem der vorhergehenden Ansprüche, der mit einem dekorativen Blechmaterial verkleidet ist.

## Revendications

1. Contenant (1) résistant aux chocs, pour arbres ou autres plantes de grande taille, le contenant (1) comprenant :
des parois latérales (3) réalisées à partir d'une pluralité de couches de poutres en acier (7), les poutres (7) ayant une coupe transversale rectangulaire ouverte ; et
un élément formant socle rigide (5) disposé à l'intérieur des parois latérales (3),
dans lequel au moins une des parois latérales (3) comprend des moyens d'amorçage de déformation (11) qui amorcent la déformation des poutres en acier (7) en cas de choc.

2. Contenant (1) selon la revendication 1, dans lequel une épaisseur de paroi latérale (3) produite par une couche supérieure (9) des poutres est plus grande qu'une épaisseur de paroi latérale produite par les couches inférieures (7) des poutres.

3. Contenant (1) selon la revendication 2, dans lequel la couche supérieure (9) des poutres s'étend vers l'intérieur.

4. Contenant (1) selon la revendication 2 ou 3, dans lequel les moyens d'amorçage de déformation (11) sont prévus dans la couche supérieure (9) des poutres.

5. Contenant (1) selon l'une quelconque des revendications précédentes, dans lequel les moyens d'amorçage de déformation (11) comprennent des découpes et/ou des concavités formées dans les poutres.

6. Contenant (1) selon la revendication 5, dans lequel les découpes et/ou concavités sont formées dans une partie intérieure des poutres.

7. Contenant (1) selon l'une quelconque des revendications précédentes, dans lequel la coupe transversale des poutres a une longueur comprise dans la plage de 150mm à 300mm et une largeur comprise dans la plage de 50mm à 150mm.

8. Contenant (1) selon l'une quelconque des revendications précédentes, dans lequel une épaisseur de paroi (3) des poutres est comprise dans la plage de 3mm à 10mm.

9. Contenant (1) selon l'une quelconque des revendications précédentes, dans lequel les poutres (7) sont soudées ensemble en des positions discrètes.

10. Contenant (1) selon l'une quelconque des revendications précédentes, dans lequel les parties latérales (3) réunies présentent, vues en plan, une section rectangulaire.

11. Contenant (1) selon l'une quelconque des revendications précédentes, dans lequel les extrémités des poutres (7) de parois latérales adjacentes se chevauchent.

12. Contenant (1) selon l'une quelconque des revendications précédentes, dans lequel les parois latérales (3) ont une hauteur comprise dans la plage de 600mm à 1200 mm.

13. Contenant (1) selon l'une quelconque des revendications précédentes, dans lequel l'élément formant socle (5) comprend un bloc de béton.

14. Contenant (1) selon la revendication 13, dans lequel le bloc de béton comprend un béton à armature d'acier en treillis (15).

15. Contenant (1) selon l'une quelconque des revendications précédentes, dans lequel l'élément formant socle (5) a une hauteur comprise dans la plage de 200mm à 400mm.

16. Contenant (1) selon l'une quelconque des revendications précédentes, dans lequel l'élément formant socle (5) est pourvu de plusieurs ouvertures (13) pour l'ancrage du contenant au sol.

17. Contenant (1) selon la revendication 13, dans lequel au moins une des ouvertures (13) est inclinée vers l'une des parois latérales (3).

18. Agencement comprenant le contenant de la revendication 16 ou 17, placé sur une surface du sol, l'agencement comprenant en outre plusieurs barres filetées qui ancrent le contenant (1) au sol, les barres se prolongeant à travers des ouvertures (13) respectives prévues dans l'élément formant socle (5) et étant reçues dans des trous correspondants prévus dans la surface du sol.

19. Agencement selon la revendication 18, qui comprend de plus un mortier pour lier les barres dans les ouvertures (13) et dans les trous à travers lesquels elles se prolongent/sont reçues.

20. Agencement selon la revendication 19, dans lequel le mortier est un mortier époxy.

21. Contenant (1) selon l'une quelconque des revendications précédentes, revêtu d'un matériau décoratif en feuille.
